# EUROPEAN PATENT APPLICATION

(11) **EP 2 146 299 A2**
(43) Date of publication of application: **20.01.2010**
(21) Application number: 09164578.8
(22) Date of filing: 03.07.2009
(51) Int. Cl.: G06F 21/00

(54) **Zero-install IP security**

(30) Priority: 14.07.2008 US 134820 P
(71) Applicant: SafeNet, Inc., Belcamp, MD 21017 (US)
(72) Inventor: Kivinen, Tero, FIN-02200 Helsinki (FI)
(74) Representative: Jones, Keith William

(57) **Abstract**

In an embodiment of a method of and system for secure communication, a computer system comprises a primary system protocol stack operative in kernel space and interfacing with an external network. A secondary system protocol stack, security software, and at least one application program operate in user space, and may be provided on a portable storage medium by a user who does not have privileges to install programs in kernel space. The application program interfaces with the secondary system protocol stack. The secondary system protocol stack interfaces with the primary system protocol stack. The security software operates on communications through the secondary system protocol stack.

## Description

The disclosure relates to maintaining security in communication over public networks.

The internet and other public networks are widely used for the communication of information. However, much of this information is of a private nature, so various schemes have been devised for encrypting communications to prevent their being read by unauthorized persons, and for authenticating communications to prevent the sender's being impersonated by unauthorized persons. One of the popular schemes is "IP security" (IPsec), a suite of protocols primarily defined in IETF standards RFC 4301 and RFC 4309, that operates at the network/internet layer, level 3 of the 5-layer TCP/IP model, level 3 of the 7-layer OSI model.

The level 3 IPsec suite has the advantage that ordinary application software does not need to be specially written to use it, because the level 3 IPsec operates between the system protocol (TCP/IP or UDP) stack and the actual network interface. In that position, IPsec is transparent to applications running in the application layer, level 5, or above. However, because IPsec operates at such a low level, it typically operates in protected kernel space, and can be installed only using administrator privileges to modify the operating system or install kernel drivers. As a result, IPsec has not hitherto been available to users not having administrator privileges on computers where it had not been provided by the administrator. For example, many organizations do not permit users to install additional software with administrator privileges on a portable computer provided by the organization, and it is sometimes expedient to use third-party computers, such as those in cybercafés and public kiosks.

Some application software can be installed on a portable device, such as a USB memory stick, and can be run from the portable device without installation on the host computer. However, such software cannot be given the kernel privileges on the host computer that would enable it to intervene between the system protocol stack and the network interface.

In one embodiment, a computer system is disclosed comprising a primary system protocol stack operating in kernel space and interfacing with an external network, a secondary system protocol stack operating in user space and interfacing with the primary system protocol stack and at least one application program, and security software operating in user space on communications between the primary and secondary system protocol stacks.

The system protocol stacks may be TCP/IP stacks, UDP stacks, or similar. Because the traffic between the secondary stack and the external network passes through the primary system protocol stack, the secondary system protocol stack does not need to be fully implemented. Only those parts of usual system protocol stack functionality necessary to present the appearance of a system protocol stack to the application program and forward messages reliably to and from the primary system protocol stack are required. Where the secondary system protocol stack is dedicated to a specific application program, and that application program does not use all the functionality of TCP/IP, the secondary system protocol stack may omit support for functions that will not be used.

The security software may be operative to encrypt and/or authenticate messages passed from the secondary system protocol stack to the primary system protocol stack for transmission over the external network, and to decrypt and/or verify the authentication of messages received over the external network and passed from the primary system protocol stack to the secondary system protocol stack.

Encrypted and/or authenticated messages passed between the security software and the primary system protocol stack may be encapsulated so that the primary system protocol stack will forward the messages without disrupting the encryption and/or authentication.

In another embodiment, there is disclosed a portable computer readable storage medium arranged in use to be operatively connected to a computer and containing security software and instructions to the computer to operate a secondary system protocol stack, and to forward messages between at least one application program and the secondary system protocol stack, and between the secondary system protocol stack and a primary system protocol stack of the computer via the security software.

The portable computer readable storage medium may also contain at least one application program configured to exchange messages for an external network with the secondary system protocol stack rather than directly with the primary system protocol stack.

In a further embodiment, there is disclosed a method of secure communication using a computer having a primary system protocol stack operative in kernel space and interfacing with an external network; the method comprising running in user space on the computer a secondary system protocol interfacing with the primary system protocol stack, at least one application program interfacing with the secondary system protocol stack, and security software operative on communications through the secondary system protocol stack, sending a message from the application program to the secondary system protocol stack; using the security software to secure the message, sending the secured message to the primary system protocol stack, and sending the secured message from the primary system protocol stack to the external network.

The external network may be the internet. The security software may be IPSec software.

The above and other aspects, features, and advantages will be more apparent from the following more particular description thereof, presented in conjunction with the following drawings wherein:

FIG. 1 is a schematic diagram of a computer network.

FIG. 2 is a flow-chart of a process for secure communication.

FIG. 3 is a diagram of dataflow in the process of FIG. 2.

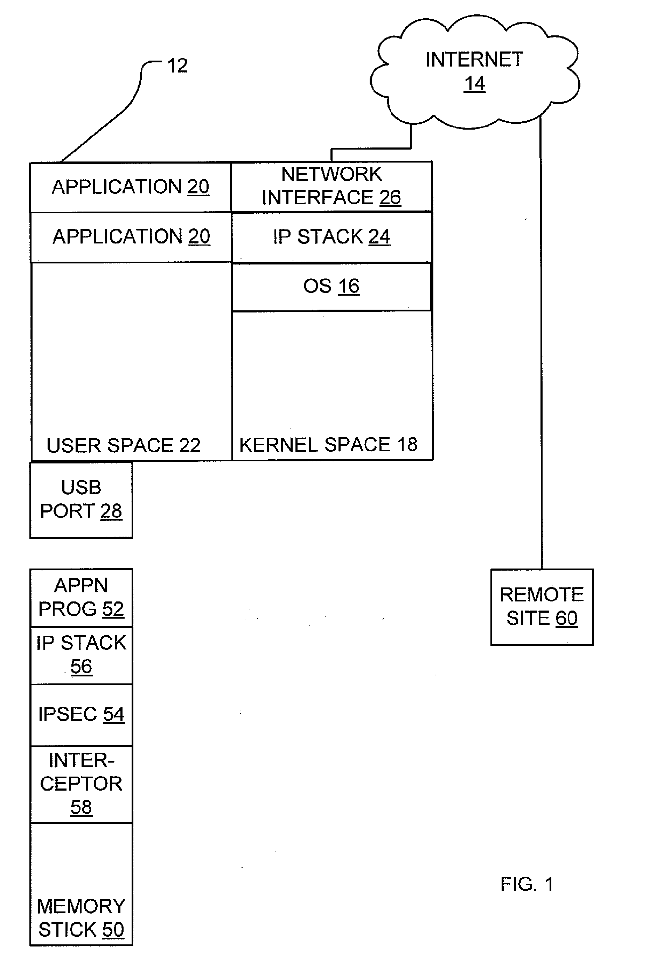

Referring to the accompanying drawings, and initially to FIG. 1, one embodiment of a computer system, indicated generally by the reference number 10, comprises a computer 12, connected to an external network such as the internet 14. The computer 12 includes an operating system 16 running in a protected kernel space 18, and one or more applications 20 running in a user space 22. The operating system processes include a primary system protocol (in an embodiment, Internet Protocol (IP)) stack 24 that transmits and receives IP formatted packets through a physical network interface 26 to and from the internet 14 and implements an Application Programming Interface (API) that the applications 20 can use to access the IP stack services.

The computer 12 also comprises a connector 28 for an external portable storage medium, which in an embodiment is a Universal Serial Bus (USB) port, and an external portable storage medium, which in an embodiment is a memory stick 50, temporarily connected to the computer 12 by insertion into the USB port 28. The memory stick 50 contains code for at least one application program 52 that can be run in the user space 22 of the computer 12 and that in operation may communicate with the internet 14. The memory stick 50 also contains code for operating a secondary IP or other system protocol stack 56 that forwards messages to and from the primary system protocol stack 24, an IP Security (IPsec) application 54 that captures and secures messages between the secondary system protocol stack 56 and the primary system protocol stack 24 to provide the secondary system protocol stack 56 with integrated IPsec functionality, and an interceptor module 58 that relays messages between the IPsec engine 54 and the primary protocol stack 24 with appropriate changes to the format.

The application program 52 is arranged, when it requires an outgoing internet connection, to call the secondary system protocol stack 56 rather than the primary system protocol stack 24. In an embodiment, the application program 52 and the secondary system protocol stack 56 and IPsec application 54 are compiled as a single program, so that traffic between them is internal to the single compiled program.

In an embodiment, the application program 52 is separate from the secondary system protocol stack 56 and IPsec application 54, and the application program 52 is modified so that external system protocol stack calls are directed to a local communication channel linking to the system protocol stack and IPsec application 54. Suitable links include named pipes, Unix domain sockets, shared memory, and local sockets. For example, the secondary system protocol stack 56 may act as a socks server. This embodiment may be preferred to compiling as a single program where a pre-existing program is to be used as the basis for application program 52, because less extensive modification to the existing code is typically required.

In a further embodiment, the secondary system protocol stack 56 and IPsec application 54 implements a socks server or other host interface that the application program 52 can be configured to connect to without requiring modification to the actual code of the application program 52. In an embodiment, the secondary system protocol stack 56 appears to the application program 52 as nearly as practical as if it were the primary system protocol stack 24 or other standard utility, in order to minimize any configuration changes to application program 52. For example, where the secondary system protocol stack 56 presents itself as a socks server, it may be configured to run in an arbitrarily chosen port number above 1024. The operating system typically permits applications to bind to local ports above 1024 without administrative privileges. The application program 52 then merely needs to be configured to connect to the same arbitrarily chosen port number. Where the secondary system protocol stack 56 and application program 52 are loaded together on memory stick 50, preconfiguring them both to the same port number is trivial. Preferably, a port other than the default socks server TCP port no. 1080 is chosen, to avoid a conflict if computer 12 has its own socks server.

In a further alternative embodiment, an Inter-Process Communication (IPC) protocol may be used for the communications between application program 52 and secondary system protocol stack 56. The IPC mechanism has the advantage of using host OS access control features, and avoiding personal firewall interactions that could interfere with a TCP based socks server. However, the direct linking of application program 52 and secondary system protocol stack 56 when using an IPC protocol may prevent third party applications from using the IPsec service, which may be a disadvantage in some configurations.

As mentioned above, IPsec applications conventionally capture messages on the external side of the IP stack, so that the IP header can, if desired, be included in the IPsec authentication. Therefore, to minimize the amount of specially written code, the IPsec application 54 may be arranged to capture messages between the secondary system protocol stack 56 and the primary system protocol stack 24, as described above. Because in the present embodiment the secondary system protocol stack 56 does not generate the final IP header, the IPsec application 54 may alternatively be integrated further upstream into the system protocol stack 56.

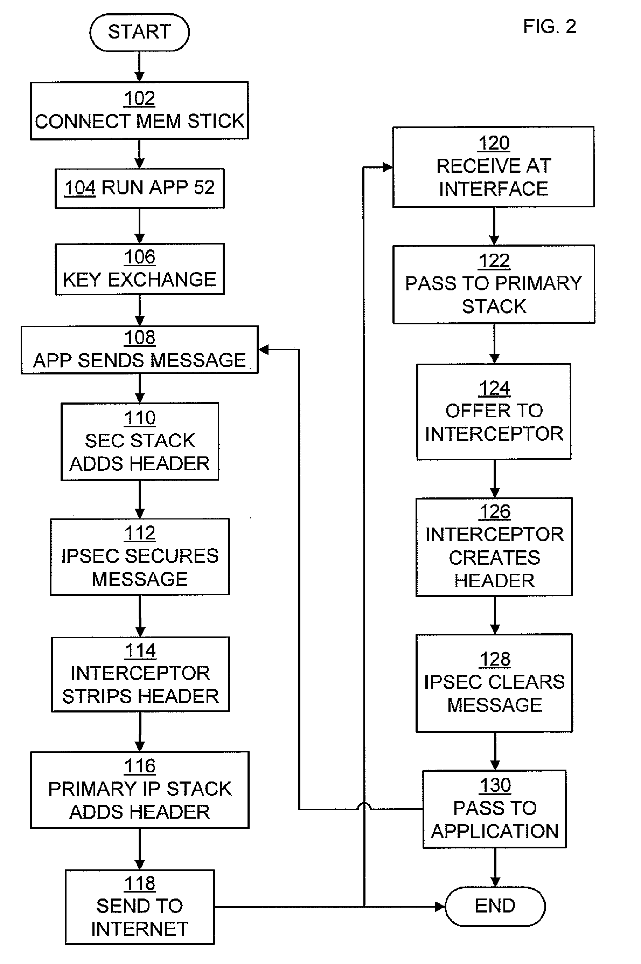

Referring now to FIG. 2, in an embodiment of a process of secure communication, in step 102 memory stick 50 is operatively connected to computer 12 by being inserted into USB port 28. Computer 12 may have a standard "plug and play" USB driver that automatically recognizes memory stick 50 and loads any necessary software to interface memory stick 50 to operating system 16.

In step 104, a user of computer 12 starts application program 52. Application program 52 is designed to run in user space from the memory stick 50, without requiring installation into or configuration of kernel space or kernel functions that an ordinary user may not have privileges for. IPsec application 54, secondary protocol stack 56, and interceptor 58 also run in user space, and may be started automatically when application program 52 starts, or only when invoked by application program 52, or may be separately started by the user.

The application program 52 attempts to send a secure message to a remote site 60 over internet 14 using IPsec. Because of the modifications discussed above, a message from application program 52 is passed to secondary system protocol stack 56, rather than directly to primary system protocol stack 24. Because the IPsec application 54, secondary protocol stack 56, and interceptor 58 have no control over the primary system protocol stack 24 and network interface 26, the connection is configured to use an encapsulation method that is compatible with the API of the primary system protocol stack 24. In this embodiment the User Datagram Protocol (UDP) with Internet Key Exchange (IKE), Network Address Translation Traversal (NAT-T), and UDP encapsulation of IPsec Encapsulating Security Payload (ESP) packets in accordance with IETF standard RFC 3948. However, in other embodiments, other encapsulation methods may be used, provided that the encapsulation is supported by the socket API of primary system protocol stack 24, and by the remote site 60.

In step 106, when a connection is initiated, an Internet Key Exchange (IKE) module in the IPsec application 54 requests the interceptor 58 to bind to the UDP port of primary protocol stack 24 using port 4500, which is the standard port for IKE NAT-T transactions, but the interceptor 58 allows the operating system 16 of computer 12 to choose a port with a number greater than 1024 and other than 4500. The interceptor 58 internally maintains a mapping between the requested port 4500 and the port assigned by the primary protocol stack 24. During IKE negotiation, the remote site 60 receives IKE UDP datagrams from the real port, but within the datagrams the IKE module declares the origin as port 4500. Both the remote site 60 and the local IKE module detect the discrepancy, infer that the source is behind an NAT gateway, and enable UDP Encapsulation for the resulting IPsec Security Association (SA).

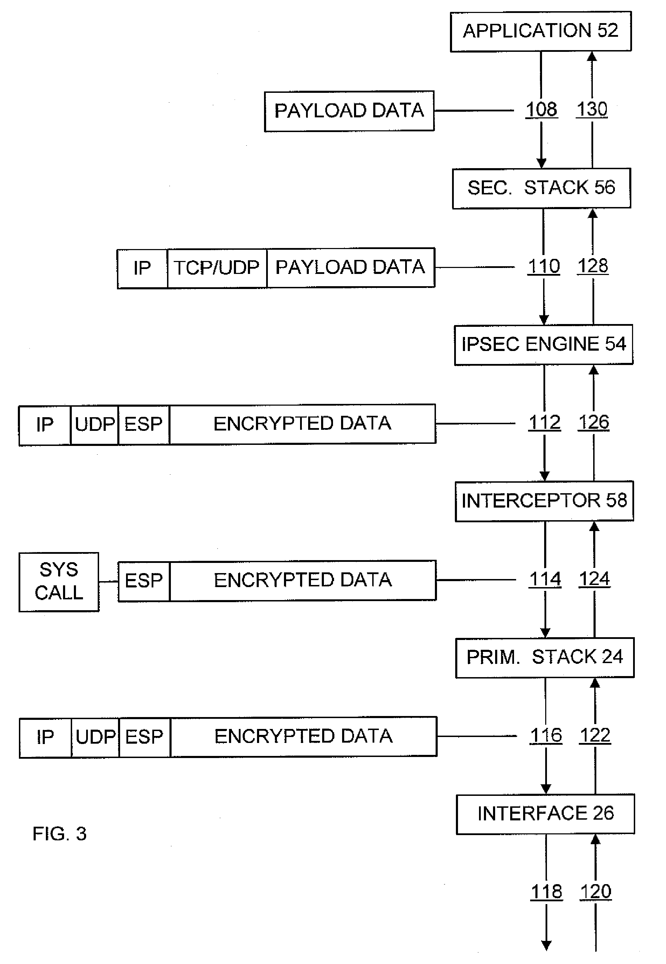

Referring now also to FIG. 3, in step 108 the application program 52 sends payload data to the secondary system protocol stack 56 as a tuple including the socket on the secondary stack 56, remote IP address, and remote port. In step 110, the secondary stack 56 appends a TCP/UDP header and an IP header, and forwards the resulting IP packet. In step 112, IPsec application 54 captures the IP packet from secondary system protocol stack 56 to encrypt, authenticate, or otherwise secure the outgoing message. The packet may, for example, be encrypted or authenticated in a manner similar to standard IPsec "transport mode" so that the original TCP/UDP header is included in the encrypted payload, the IP header generated by secondary system protocol stack 56 remains unaltered, and the correct Encapsulating Security Payload (ESP) and UDP headers for the encrypted or otherwise secured payload are inserted behind the IP header. Alternatively, in "tunnel mode," the original IP header may be hidden inside the encrypted packet, and IPsec application 54 may append its own IP header, as well as the ESP and UDP headers. Techniques for encapsulating, adding, or substituting headers when forwarding internet packets and messages through devices, such as firewalls and address translators, that do more than merely route and forward, are well known. Any suitable techniques, including techniques yet to be developed, may be used. The IPsec engine 54 then forwards the secured message to interceptor 58.

In step 114, interceptor 58 removes the outgoing IP and Encapsulation headers, in this embodiment IP and UDP headers, and generates a system call to the API of the primary system protocol stack 24 to send the secured data to the remote site 60 together with the remote IP address and port number from the previous IKE exchange. The port number is generated using the mapping from step 106.

In step 116, primary system protocol stack 24 generates the final headers, and forwards the message to the physical network interface 26, which in step 118 sends the message across the internet 14 to remote site 60. For example, the secured ESP packet from the IPsec application 54 may be encapsulated as an apparently standard UDP packet with an IP header generated by the primary system protocol stack 24 from the information in the API interface call.

In step 120, an incoming message from the remote site 60 in the form of a UDP packet is received at the physical network interface 26, which in step 122 forwards the message to the primary system protocol stack 24. In step 124, the primary system protocol stack 24 removes the IP header and announces that an incoming UDP datagram is available at the UDP socket. In step 126, the interceptor 58 receives the UDP payload and the remote IP address and port of the datagram using an appropriate API system call.

If the UDP encapsulation header is appropriate, the interceptor synthesizes an IP packet using the information from the API system call, mapping the port number to 4500 using the mapping generated in step 106, and forwards the packet to the IPsec application 54 which in step 128 decrypts the incoming packet, or verifies and strips its authentication header, and forwards the payload, with reconstructed IP and TCP/UDP headers, to secondary system protocol stack 56. In step 130, secondary system protocol stack 56 then makes the payload available at the correct socket for forwarding to the correct application program 52, which processes the data content of the packet in the usual way.

Although specific embodiments have been described, the skilled reader will understand how features of different embodiments may be combined and substituted.

For example, the application program 52, the secondary system protocol stack 56, the IPsec code 54, and the interceptor 58 have been described as being loaded on, and run from, memory stick 50. Instead, any or all of them may be loaded on a permanent storage volume of computer 12, but without the administrator privileges that would enable IPsec code 54 to intercept messages between primary system protocol stack 24 and physical network interface 26.

Various details of implementation of the described systems and methods may depend on details of the computer 12 and operating system 16, and it is within the ability of the skilled person to adapt the described systems and methods to different computers and/or operating systems including computers and/or operating systems to be developed in the future..

The embodiments have been described as using currently standard Internet protocols and procedures, but it is or will be within the ability of the skilled person to adapt the described systems and methods to different networks and/or different protocols, including networks and/or protocols to be developed in the future. Alternatively, a non-standard procedure may be used provided the procedure used is compatible with the primary system protocol stack and with the remote site 60. However, unless it is known that only specific remote sites 60 and specific primary protocol stacks 24 will be used, and are compatible with the non-standard procedure, that may entail an increased risk of communications failing because of incompatibilities. That is a particularly serious concern when using "connectionless" protocols such as UDP, with which there is no explicit report of the success or failure of a communication.

## Claims

1. A computer system comprising:
a primary system protocol stack operative in kernel space and interfacing with an external network;
a secondary system protocol stack operative in user space and interfacing with the primary system protocol stack;
at least one application program operative in user space and interfacing with the secondary system protocol stack; and
security software operative in user space on communications through the secondary system protocol stack.

2. The computer system according to claim 1, wherein the secondary system protocol stack is integrated with the application program.

3. The computer system according to claim 1 or claim 2, wherein the security software is operative to secure messages passed from the secondary system protocol stack to the primary system protocol stack for transmission over the external network, and to unsecure messages received over the external network and passed from the primary system protocol stack to the secondary system protocol stack.

4. The computer system according to any of claims 1 to 3, wherein the security software is operative to encapsulate secured messages passed to the primary system protocol stack so that the primary system protocol stack will pass the messages without affecting data relating to security.

5. The computer system according to any of claims 1 to 4, comprising an interceptor that in operation is interposed between the security software and the primary system protocol stack, wherein the security software emits outbound messages in a format that would be appropriate for sending from a standard system protocol stack to an external network, and the interceptor forwards the messages to the primary system protocol stack in a format appropriate for processing by the primary system protocol stack to produce messages appropriate for sending to the external network.

6. The computer system according to claim 5, wherein the interceptor removes a header from outbound messages, and supplies to the primary system protocol stack information from which the primary system protocol stack adds a header similar in format to the one removed.

7. The computer system according to claim 6, wherein the interceptor maps a value of at least one datum from the removed header used in routing of messages to a different value of a corresponding datum in the information supplied to the primary system protocol stack.

8. A computer readable storage medium arranged in use to be operatively connected to a computer and containing computer readable code for security software and instructions to the computer to operate a secondary system protocol stack, and to pass messages between at least one application program and the secondary system protocol stack, and between the secondary system protocol stack and a primary system protocol stack of the computer via the security software.

9. The computer readable storage medium according to claim 8, containing computer readable instructions to cause a computer to run at least one application program.

10. The computer readable storage medium according to claim 9, wherein the at least one application program is configured to exchange messages for an external network with the secondary system protocol stack rather than directly with the primary system protocol stack.

11. The computer readable storage medium according to any of claims 8 to 10, comprising computer readable code for an interceptor that in operation is interposed between the security software and the primary system protocol stack, wherein the security software includes instructions to emit outbound messages in a format that would be appropriate for sending from a standard system protocol stack to an external network, and the interceptor includes instructions to forward the messages to the primary system protocol stack in a format appropriate for processing by the primary system protocol stack to produce messages appropriate for sending to the external network.

12. The computer readable storage medium according to claim 11, wherein the interceptor includes instructions to remove a header from outbound messages, and to supply to the primary system protocol stack information enabling the primary system protocol stack to add a header similar in format to the one removed.

13. The computer readable storage medium according to claim 12, wherein the interceptor includes instructions to map a value of at least one datum from the removed header used in routing of messages to a different value of a corresponding datum in the information supplied to the primary system protocol stack.

14. The computer readable storage medium according to any of claims 8 to 13, which is a portable storage medium arranged to be temporarily operatively connected to a computer for use.

15. A method of secure communication using a computer having a primary system protocol stack operative in kernel space and interfacing with an external network; the method comprising:
running in user space on the computer a secondary system protocol interfacing with the primary system protocol stack, at least one application program interfacing with the secondary system protocol stack, and security software operative on communications through the secondary system protocol stack;
sending a message from the application program to the secondary system protocol stack;
using the security software to secure the message;
sending the secured message to the primary system protocol stack; and
sending the secured message from the primary system protocol stack to the external network.
